Europäisches Patentamt

European Patent Office

Office européen des brevets

(19)

(11) Publication number: **0 032 834**
**B1**

(12)

# EUROPEAN PATENT SPECIFICATION

(45) Date of publication of patent specification: **25.01.84**

(21) Application number: **81300220.1**

(22) Date of filing: **19.01.81**

(51) Int. Cl.³: **H 04 N 5/783,**
**G 11 B 21/10**

(54) A positionable element driving circuit.

(30) Priority: **19.01.80 JP 4815/80**

(43) Date of publication of application:
**29.07.81 Bulletin 81/30**

(45) Publication of the grant of the patent:
**25.01.84 Bulletin 84/4**

(84) Designated Contracting States:
**DE FR GB**

(56) References cited:
**US - A - 4 143 405**
**US - A - 4 163 993**

(73) Proprietor: **Matsushita Electric Industrial Co., Ltd.**
**1006, Oaza Kadoma**
**Kadoma-shi Osaka-fu, 571 (JP)**

(72) Inventor: **Kobayashi, Masaaki**
**1-17-2, Uguisudai**
**Kawanishi-shi Hyogo-ken (JP)**
Inventor: **Igata, Kouichi**
**E-204, 1-9-5, Nasuzukuri**
**Hirakata-shi Osaka-fu (JP)**
Inventor: **Takeuchi, Akihiro**
**128-37, Tsukimi-cho Higashiikoma**
**Ikoma-shi Nara-ken (JP)**

(74) Representative: **Crawford, Andrew Birkby et al,**
**A.A. THORNTON & CO. Northumberland House**
**303-306 High Holborn**
**London WC1V 7LE (GB)**

Courier Press, Leamington Spa, England.

A positionable element driving circuit

This invention generally relates to a positionable element driving circuit for driving a positionable element to control position of video heads, such as a bimorph type piezoelectric element.

Recently, an automatic tracking system has been introduced to a video tape recorder/reproducer. Such system makes possible a proper tracking of the video track recorded on a video tape, reproducing no noise band pictures at any tape speed modes, for example, normal speed mode, slow motion mode, still motion mode, quick motion mode, reverse motion mode and so on.

In the conventional automatic tracking system, video heads are mounted on positionable elements such as piezoelectric element. The piezoelectric element is supplied with displacing pattern signals which are equivalent to the video tracks on the video tape, and the video heads can trace the video tracks.

But a bimorph type piezoelectric element has non-linear supplied voltage-position characteristics, and the tracking is difficult when the displacing pattern signals change.

U.S. Patent 4,143,405 discloses an automatic head scan tracking system which has a driving circuit for driving a positionable element for compensating for supplied voltage-displaced position characteristics of the element. However, the U.S. Patent discloses only compensation of the non-linearity of DC displacement of the piezoelement with respect of DC voltage or a very low frequency AC voltage applied to the piezoelement. That is, the U.S. Patent does not teach anything about the non-linearity of the peak-to-peak displacement with respect to the peak-to-peak value of the applied AC voltage, and accordingly about the compensation for it.

The present invention provides a positionable element driving circuit for supplying an AC driving voltage to a positionable bimorph type piezoelectric element in an automatic head scan teaching system of a video tape recorder/reproducer so as to alternatingly displace said positionable element comprising: a displacing pattern signal source for supplying an AC displacing pattern signal; and amplifying means coupled to said displacing pattern signal source and supplied with said displacing pattern signal and having a gain for amplifying said displacing pattern signal, characterised in that said driving circuit further comprises gain control means coupled to said amplifying means for control said gain of said amplifying means so as to make said gain correspond to a value which is inversely proportional to the gradient of a curve of supplied voltage vs. displaced position with respect to said positionable element, which curve is to be defined by displaced position of said positionable element at the peak-to-peak voltage of said displacing pattern signal supplied directly to said positionable element.

An advantage of this invention is that it enables tracing of video tracks when the displacing pattern signals exchange variously with video tape transporting speed.

In order that the present invention be more readily understood embodiment thereof will now be described by way of example only with reference to the accompanying drawings, in which:

Figure 1 is a graph showing dynamic characteristics of a bimorph type piezoelectric element;

Figure 2 is a schematic perspective view of a piezoelectric element and other elements for measuring dynamic characteristics of the piezoelectric element;

Figure 3 is a schematic circuit diagram, in block form, of a video tape recorder including a positionable element driving circuit of this invention;

Figure 4 is a schematic drawing showing a video track pattern recorded on a magnetic tape;

Figures 5(a), (b) and (c) are graphs showing waveforms of the input and output signals of an operational circuit;

Figure 6 is a schematic block diagram of the operational circuit;

Figures 7 (a) to (h) are graphs showing waveforms of various signals at the operational circuit;

Figure 8 is a schematic circuit diagram of an example of a driving circuit for driving the piezoelectric element;

Figure 9 is a schematic circuit diagram of another example of the driving circuit;

Figure 10 is a schematic perspective view of another example of the piezoelectric element; and

Figure 11 is a schematic perspective view of yet another example of the piezoelectric element.

Now, a preferred embodiment of this invention will be described after the non-linearity of a bimorph type piezoelectric element as clarified as follows.

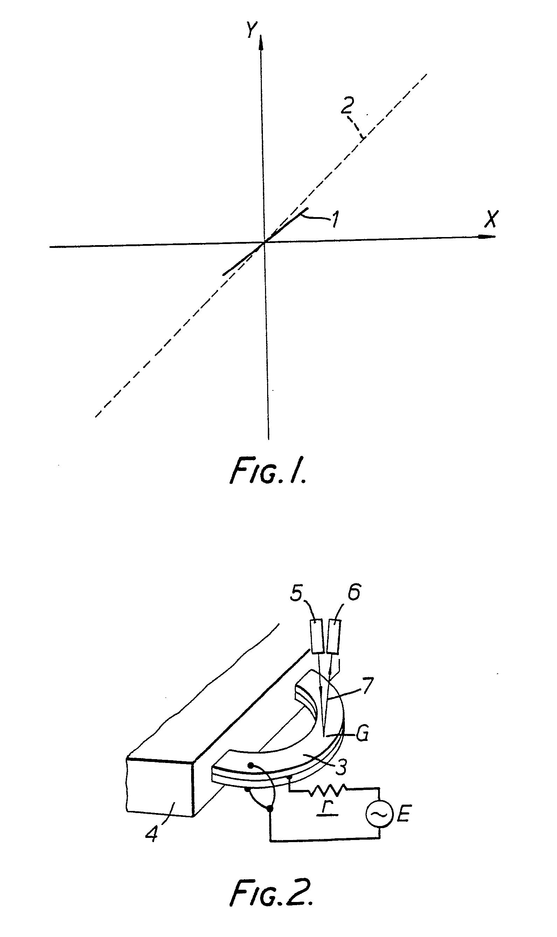

Fig. 1 shows dynamic characteristics of a bimorph type piezoelectric element or piezoelement. Fig. 2 shows a method of measuring the dynamic characteristics. The shape of a piezoelement 3 is semicircle or arched. The piezoelement 3 is fixed to a block 4. The piezoelement 3 is supplied with a signal (voltage E) through a resistor $r$. The displacement of the unrestricted point G of the piezoelement 3 is measured without contact. The displacement is measured by output signal level of an optical receiver 6. In Fig. 2, the light is radiated by a light projector 5, is passed along an arrow 7, is reflected at point G and excites the optical receiver 6.

In Fig. 1, the supplied voltage E is plotted on the X axis and output signal level is plotted on the Y axis. Using an oscilloscope, a Lissajous figure is obtained. When a 30 Hz CW is supplied to the piezoelement 3, a Lissajous figure 2 shown by a dotted line is obtained. As shown in Fig. 1, the gradient of Lissajous figures depends upon the supplied voltage. This is the non-linearity of a bimorph type piezoelement.

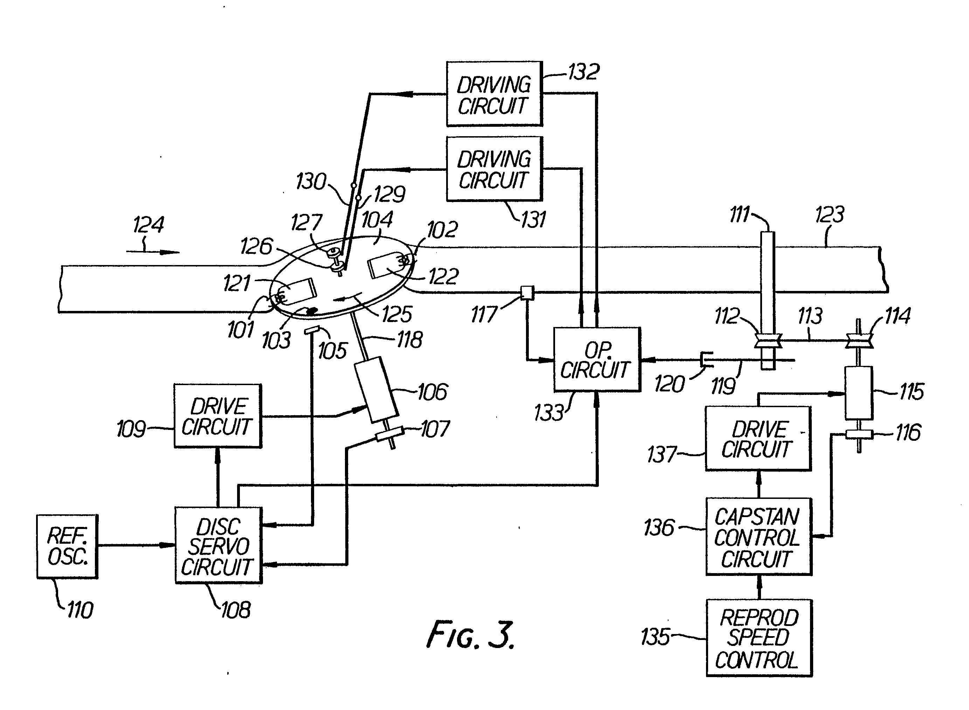

Fig. 3 shows a construction of a video tape recorder (reproducing mode) including a positionable element driving circuit of this invention. Video heads 101 and 102 have the same azimuth angle (for example 6°). The video heads 101 and 102 are mounted at the free end of positionable elements 121 and 122 (bimorph type piezoelectric elements). The other ends of elements 121 and 122 are fixed to a rotary disk 104. A magnet 103 for indicating the rotating phase of the video heads 101 and 102, is attached to the rotary disk 104. A rotating phase detector 105, is fixed adjacent the path of movement of the magnet 103 in order to sense the passage of the magnet 103. The rotary disk 104 is driven by a DC motor 106, and the direction of rotation is indicated by the arrow 125.

The output signal of a frequency generator (FG) 107, which is mounted at a shaft of the DC motor 106, is supplied to a disk servo circuit 108. The output signals of the rotating phase detector 105 and of a reference oscillator 110 are also supplied to the disk servo circuit 108. The output signal of the disk servo circuit 108 is supplied to the DC motor 106 through a drive circuit 109. By these means, the rotating phase control of the rotary disk 104 is achieved. The magnetic tape 123 is driven by a capstan 111 and a pinch-roller (not shown), and the driven direction is indicated by an arrow 124. The capstan 111 is driven by a DC motor 115 through a pulley 112, a belt 113, and a pulley 114. The output signal of a frequency generator (FG) 116 which indicates the rotations of the DC motor 115 and the output signal of a reproduction tape speed controller 135 are supplied to a capstan control circuit 136.

The output signal of a control head 117 (hereafter, this signal will be designated as a control signal R), the output signal of a rotating phase detector 120 and the output signal P of the disk servo circuit 108 are supplied to an operational circuit 133. The rotating phase of the capstan 111 is detected by a combination of a disk 119 having a number of slits which is attached to the capstan 111 and a rotating phase detector 120. Then, this rotating phase detector 120 generates pulses in proportion to the speed of the capstan 111. For example, when the reproducing tape speed is the same as that at recording, assumption is made that the rotating phase detector 120 is chosen so as to generate 10 pulses during one period between successive reproduced control signals R. The rotating phase detector 120 generates the same 10 pulses regardless of the change of the reproducing tape speed, this means that a spacing period between successive reproduced control signals R is divided into ten divisions effectively. Hereafter, the output pulses of the rotating phase detector 120 are called sub-control signals Q.

An embodiment of the rotating phase detector 120 described above is made by a luminous body and a photo detector, and detects the light which passes through the slits on the disk 119, but similar output signals can also be obtained by employing a toothed wheel made of a magnetic material in place of the slit disk 119 and a magnetic flux detector in place of the detector 120.

The output signal of the operational circuit 133, which is a displacement pattern, is supplied to the driving circuits 131 and 132, and amplified enough to drive the positionable elements 121 and 122. These amplified signals are supplied to the positionable elements 121 and 122 through conductive brushes 129 and 130, and slip rings 126 and 127. The slip rings are attached to a rotary shaft 118 of the DC motor 106, but it is electrically insulated from the shaft 118.

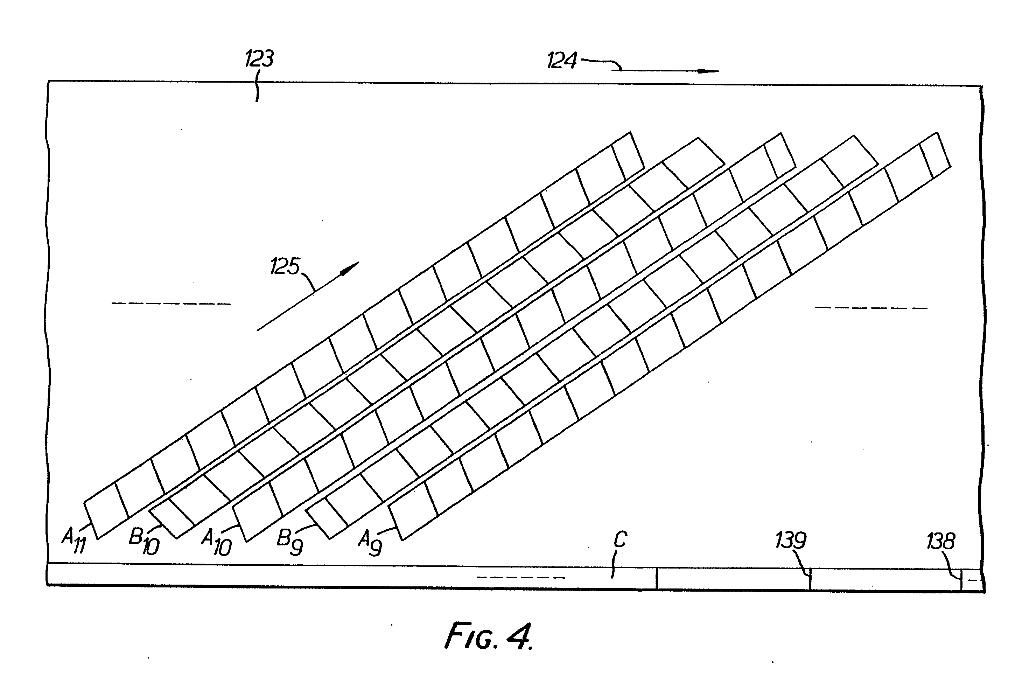

Fig. 4 represents the video track pattern recorded on the magnetic tape 123. $B_9$, $A_{10}$, $B_{10}$, $A_{11}$, $B_{11}$, and $A_{12}$ are one field video tracks of video signals, $A_{10}$, $A_{11}$ and $A_{12}$ tracks are recorded by one video head whose azimuth is $+6°$. $B_9$, $B_{10}$ and $B_{11}$ tracks are recorded by another video head whose azimuth is $-6°$. C is the control track. The control signals, which represent the recording phase of the video signals, are recorded on the control track C at the rate of one control signal everyone picture frame. In the recording process, the starting point of $A_{10}$ track and the control signal 138 are recorded at the same time. The starting point of $A_{11}$ track and the control signal 139 are recorded at the same time.

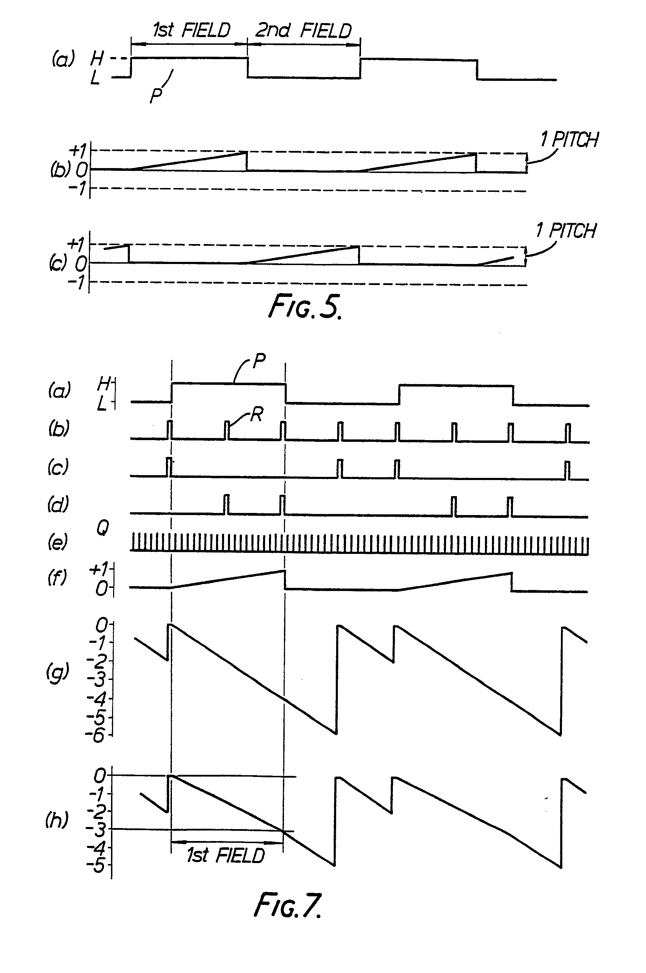

In the reproducing process, when the video head 101 is scanning the starting point of $A_{10}$ track, the control head 117 simultaneously reproduces the control signal 138. At that time, it is assumed that the magnetic tape 123 is stopped, then the trace end point of the video head 101 is the end point of the track $B_9$. This scanning period is called the first field. In order to reproduce pictures without noise-bar, the video head 101 must trace the $A_{10}$ track with on-track condition from beginning to end. By supplying a voltage increasing linearly with scanning as shown in Fig. 5 (b) to the piezoelectric element 121 during the first field, the position of the video head 101 is linearly moved with scanning, then the video head is capable of following on the whole of the video track. This required movement quantity is zero at trace starting point of $A_{10}$ track and is one track pitch at trace end point. This pattern of movement quantity is called the still pattern.

The operational circuit 133 which generates the displacing pattern will hereafter be explained. In Fig. 3, the rotating phase of video head 101 is detected by the magnet 103 and the rotating phase detector 105. The rotating head phase signals are delayed at the disk servo circuit 108, and the signals P are obtained. The signals P have the H level at the first field as shown in Fig. 5 (a). The signals P are supplied to the operational circuit 133. A still pattern generator 151 which is part of the operational circuit 133 generates such movement quantity using the signals P. An embodiment of the operational circuit 133 is shown in Fig. 6. In Fig. 6, the signals P are supplied to the input terminal 150. The still pattern generator 151 consists of an oscillator 152, a counter 153, a counter 154, a D/A (digital-analog) converter 155, and a D/A converter 156. The control signals R reproduced from the control head 117 are supplied to the input terminal 163. The sub-control signals Q supplied from the rotating phase detector 120 are supplied to the input terminal 164. These input signals at the input terminals 150, 163, and 164 are supplied to the still pattern generator 151 and counters 165 and 190. And these signals are derived from the output terminal 161 and 162 through a D/A converter 169, a D/A converter 170, an adder 157, an adder 158, the low pass filter 159 and the low pass filter 160.

Now, the performance of the operation circuit 133 at still mode will be explained. The oscillator 152 generates 300Hz pulse signals for example. The output pulses of the oscillator 152 are supplied to the CP terminal of the counter 153. A reset terminal of the counter 153 is connected to the input terminal 150. The counter 153 is activated by H level of the signals P and is reset by L level of the signals P. The output signals of the counter 153 are supplied to the output terminal 161 through the D/A converter 155, the adder 157 and the low pass filter 159.

The waveforms of the output signal are shown in Fig. 5(b). As the frequency of the oscillator 152 is 300Hz and the period of the first field is about 16.6 m sec., about five pulses are supplied to the counter 153 during the period. When the video head 101 scans the starting point of the $A_{10}$ track, the control signal 138 is reproduced and the magnetic tape 123 is stopped. At that time, as the counter 165 is reset by the control signal 138, the D/A converter 169 generates zero level signal during the first field, and the adder 157 passes only the output signals of the D/A converter 155 shown in Fig. 5 (b). These signals are supplied to the piezoelectric element 121 through the driving circuit 131, the conductive brush 129 and the slip ring 126. In consequence, the video head 101 can trace the $A_{10}$ track with on-track condition during the first field.

If the magnetic tape 123 stops continuously, the video head 102 begins to scan the $A_{10}$ track after the video head 101 scanned the $A_{10}$ track.

The azimuth of the video head 102 is also +6°. If the output terminal 162 provides the signals shown in Fig. 5 (c), the video heads can scan the $A_{10}$ track with on-track condition during the second field. The output signals are supplied to the piezoelectric element 122 through driving circuit 132, a conductive brush 130 and a slip ring 127. In this case, the output pulses of the oscillator 152 are counted by the counter 154. The signal shown in Fig. 5 (c) is developed to the output terminal 162 through the D/A converter 156, the adder 158 and the low pass filter 160. The counter 154 is activated by L level of the signals P and is reset by H level of the signals P. As the magnetic tape 123 stops continuously, only the output signal of D/A converter 156 is supplied to the adder 158. The signals as shown in Fig. 5 (b) and in Fig. 5 (c) are called still pattern.

Next, a case will be explained at four times speed playback. Fig. 7 (a), (b) and Fig. 7 (e) show the phase relation between the signals P and the control signals R and the sub-control signals Q. Fig. 7 (c) and (d) show the rest signals of the counters 165 and 190. When these signals are applied to the input terminals 150, 163 and 164, the signals shown in Fig. 7 (f) and (g) are developed at the output terminals of the D/A converters 155 and 169. And the signal shown in Fig. 7 (h) are supplied to the output terminal 161 through the adder 157 and the low pass filter 159.

As described above, at still mode, the operational circuit 133 supplies to the driving circuit 131 certain voltage corresponding to one video track. And, at four times speed mode, the operational circuit 133 supplies a voltage three times as much as the supplied voltage at still mode. If the characteristics of piezoelectric element 101 were linear, the driving circuit 131 would linearly amplify the output signal of the operational circuit 133.

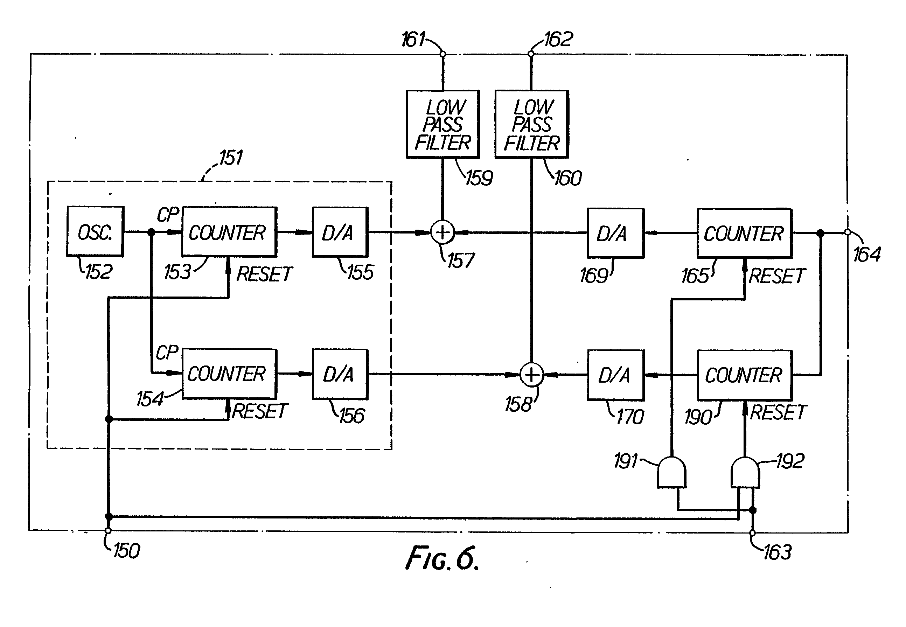

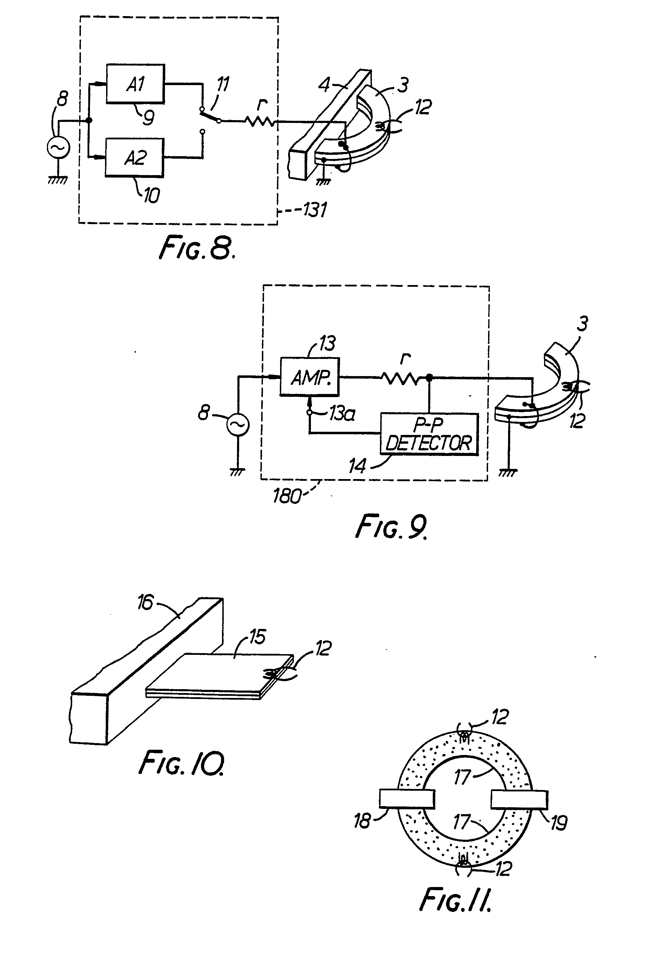

However, as the piezoelectric element 101 has non-linear characteristics, the driving circuit 131 is required to compensate the non-linearity. Fig. 8 and Fig. 9 show such compensation. In Fig. 8, a signal source 8 represents the operational circuit 133. The piezoelectric element 3 means the piezoelement 121. The operational circuit 131 is constructed by an amplifier 9 whose amplitude is $A_1$, a further amplifier 10 whose amplitude is $A_2$, a switch 11 and a resistor r. When the supplied peak-to-peak voltage of the piezoelement 3 is such as shown by the solid line 1 in Fig. 1, the switch 11 connects the amplifier 9. This corresponds to the still mode. When the supplied peak-to-peak voltage of piezoelement 3 is such as shown by the dotted line 2 in Fig. 1, the switch 11 connects the amplifier 10. This corresponds to the four times speed mode. The amplitudes $A_1$ and $A_2$ are in inverse proportion to the gradient of the solid line 1 and dotted line 2. As the driving circuit 131 compensates the non-linearity, the video head 12 can trace the video track.

In Fig. 9, a signal source 8 represents the operational circuit 133. A driving circuit 180 is the other construction of the driving circuit 131. The driving circuit 180 is constructed by an amplifier 13, whose amplitude can be controlled, a resistor (r) and a peak-to-peak voltage detector 14. The amplitude of the amplifier 13 is in inverse proportion to the supplied voltage at the terminal 13a. The amplifier 13 is constructed by an FET or a photo coupler. The peak-to-peak voltage detector 14 is constructed by a conventional diode detector and a conventional time constant circuit. As the driving circuit 180 compensates the non-linearity, the video head 12 can trace the video track.

Fig. 10 and Fig. 11 show other types of piezoelectric elements. Fig. 10 shows a rectangular type piezoelement 15, while Fig. 11 shows a circular type piezoelement 17.

## Claims

1. A positionable element driving circuit for supplying an AC driving voltage to a positionable bimorph type piezoelectric element (3, 15 or 17) in an automatic head scan tracking system of a video tape recorder/reproducer so as to alternatingly displace said positionable element (3, 15 or 17), comprising: a displacing pattern signal source (8) for supplying an AC displacing pattern signal, and amplifying means (9, 10 or 13) coupled to said displacing pattern signal source (8) and supplied with said displacing pattern signal and having a gain for amplifying said displacing pattern signal, characterised in that said driving circuit further comprises gain control means (11 or 14) coupled to said amplifying means (9, 10 or 13) for controlling said gain of said amplifying means (9, 10 or 13) so as to make said gain correspond to a value which is inversely proportional to the gradient of a curve of supplied voltage vs. displaced position with respect to said positionable element (3, 15 or 17), which curve is to be defined by displaced position of said positionable element (3, 15 or 17) at the peak-to-peak voltage of said displacing pattern signal supplied directly to said positionable element (3, 15 or 17).

2. A positionable element driving circuit according to claim 1, wherein said amplifying means (9, 10 or 13) comprises a plurality of amplifiers (9, 10) having a common input terminal coupled to said displacing pattern signal source (8) and having respective gains different from each other, and said gain control means (11 or 14) comprises switching means (11) having a plurality of input terminals respectively coupled to output terminals of said plurality of amplifiers (9, 10) and having one output terminal for passing said displacing pattern signal to said output terminal of said switching means (11) through one of said plurality of amplifiers (9, 10) by connecting one of said input terminals of said switching means (11) to said output terminal of said switching means (11) in correspondence with the peak-to-peak voltage of said displacing pattern signal.

3. A positionable element driving circuit according to claim 1, wherein said amplifying means (9, 10 or 13) is a controlled gain amplifier (13), and said gain control means comprises a peak-to-peak detector (14) for controlling said gain of said controlled gain amplifier (13) in response to the peak-to-peak voltage of said displacing pattern signal.

## Patentansprüche

1. Treiberschaltung für ein positionierbares Element zum Zuführen einer Treiberwechselspannung zu einem positionerbaren piezoelektrischen Element (3, 15 oder 17) der Bimorphart in einem automatischen Abstastkopf-Spurhaltesystem eines Videoband-Aufzeichnung-/Wiedergabegerät, um das positionierbare Element (3, 15 oder 17) abwechselnd zu verstellen, mit: einer Verstellmustersignalquelle (8) zum Zuführen eines Wechselspannungsverstellmustersignals und Verstärkungsvorrichtungen (9, 10 oder 13), die mit der genannten Verstellmustersignalquelle (8) gekoppelt und mit dem genannten Verstellmustersignal gespeist sind und eine Verstärkung zum Verstärken des genannten Verstellmustersignals besitzten dadurch gekennzeichnet, daß die genannte Treiberschaltung ferner eine Verstärkungsregelvorrichtung (11 oder 14) aufweist, die mit den genannten Verstärkungsvorrichtungen (9, 10 oder 13) zum Regeln der genannten Verstärkung der genannten Verstärkungsvorrichtungen (9, 10 oder 13) gekoppelt ist, die genannte Verstellung so einzustellen, daß sie einem Wert entspricht, der umgekehrt proportional zu dem Gradienten einer Kurve der zugeführten Spannung über der verstellten Position bezüglich des genannten positionerbaren Elementes (3, 15 oder 17) ist, welche Kurve zu definieren ist, durch die verstellte Position des genannten positionierbaren Elementes (3, 15 oder 17) bei der Spitze-Spitze-Spannung des genannten Verstellmustersignals, das direkt dem genannten positionierbaren Element (3, 15 oder 17) zugeführt wird.

2. Treiberschaltung für ein positionierbares Element gemäß Anspruch 1, wobei die genannten Verstärkungsvorrichtungen (9, 10 oder 13) eine Mehrzahl von Verstärkern (9, 10) aufweisen, die eine mit der genannten Verstellmustersignalquelle (8) gekoppelte, gemeinsame Eingangsklemme besitzen und entsprechende voneinander verschiedene Verstärkungen aufweisen, und die genannte Verstärkungsregelvorrichtung (11 oder 14) eine Schaltvorrichtung (11) mit einer Mehrzahl von Eingangsklemmen aufweist, die entsprechend mit Ausgangsklemmen der genannten Mehrzahl von Verstärkern (9, 10) gekoppelt sind, sowie eine Ausgangsklemme zum Durchlassen des genannten Verstellmustersignals zu der genannten Ausgangsklemme der genannten Schaltvorrichtung (11) durch einen der genannten Vielzahl von Verstärkern (9, 10) durch Verbinden einer der genannten Eingangsklemmen der genannten Schaltvorrichtung (11) mit de gennanten Ausgangsklemme der genannten Schaltvorrichtung (11) entsprechend der Spitze-Spitze-Spannung des gennanten Verstellmustersignals.

3. Treiberschaltung für ein positionierbares Element gemäß Anspruch 1, wobei die genannten Verstärkungsvorrichtungen (9, 10 oder 13) ein Verstärker (13) mit geregelter Verstärkung sind, und die genannten Verstärkungsregelvorrichtungen einen Spitze-Spitze-Dedektor (14) zum Regeln der genannten Verstärkung des genannten Verstärkers (13) mit regelbarer Verstärkung unter Ansprechen auf die Spitze-Spitze-Spannung des gennanten Verstellmustersignals aufweist.

## Revendications

1. Circuit de commande d'un élément pouvant être positionné, destiné à appliquer une tension de commande alternative à un élément piézoélectrique de type bimorphe pouvant être positionné (3, 15 our 17) dans un système d'alignement à balayage de tête automatique d'un appareil d'enregistrement/reproduction d'images sur bande, afin de déplacer alternativement ledit élément pouvant être positionné (3, 15 ou 17) et comprenant une source (8) de signal de configuration de déplacement qui fournit un signal alternatif de configuration de déplacement et un dispositif amplificateur (9, 10 ou 13) couplé avec ladite source (8) de signal de configuration de déplacement et recevant ledit signal de configuration de déplacement, et ayant un gain pour amplifier ledit signal de configuration de déplacement, caractérisé en ce que ledit circuit de commande comporte en outre un dispositif de commande de gain (11 ou 14) couplé avec ledit dispositif d'amplification, (9, 10 ou 13) pour commander le gain dudit dispositif d'amplification (9, 10 ou 13) afin que ledit gain corresponde à une valeur qui est inversement proportionnelle au gradient d'une courbe de position déplacée en fonction de la tension appliquée par rapport audit élément pouvant être positionné (3, 15 ou 17), ladite courbe étant définie par une position déplacée dudit élément pouvant être positionné (3, 15 ou 17) à la tension crête à crête dudit signal de configuration de déplacement appliqué directement audit élément pouvant être positionné (3, 15 ou 17).

2. Circuite de commande d'élément pouvant être positionné selon la revendication 1, dans lequel ledit dispositif d'amplification (9, 10 ou 13) comporte plusieurs amplificateurs (9, 10) ayant une borne d'entrée commune couplée avec ladite source (8) de signal de configuration de déplacement et ayant des gains respectifs différents les uns des autres, et ledit dispositif de commande de gain (11 ou 14) comprenant un dispositif de commutation (11) avec plusieurs bornes d'entrée couplées respectivement aux bornes de sortie desdits plusieurs amplificateurs (9, 10) et ayant une borne de sortie pour faire passer ledit signal de configuration de déplacement vers ladite borne de sortie dudit dispositif de commutation (11) par l'un desdits plusieurs amplificateurs (9, 10) en connectant l'une desdites bornes d'entrée dudit dispositif de commutation (11) à ladite borne de sortie dudit dispositif de commutation (11) en correspondance avec la tension crête à crête dudit signal de configuration de déplacement.

3. Circuit de commande d'un élément pouvant être positionné selon la revendication 1, dans lequel ledit dispositif d'amplification (9, 10 ou 13) est un amplificateur (13) à gain commande, et ledit dispositif de commande de gain comporte un détecteur crête à crête (14) pour commander ledit gain dudit amplificateur (13) à gain commandé en réponse à la tension crête à crête dudit signal de configuration de déplacement.

FIG. 1.

FIG. 2.

FIG. 3.

FIG. 4.

FIG.5.

FIG.7.

FIG.6.

0 032 834

FIG. 8.

FIG. 9.

FIG. 10.

FIG. 11.